# EUROPÄISCHE PATENTANMELDUNG

(11) **EP 0 914 937 A1**
(43) Veröffentlichungstag der Anmeldung: **12.05.1999**
(21) Anmeldenummer: 97119560.7
(22) Anmeldetag: 07.11.1997
(51) Int. Cl.: B29C 69/00, B29C 49/00, B29C 65/02, B65D 75/58

(54) **Verfahren zur Herstellung von flexiblen Kunststoffbehältern**

(71) Anmelder: NITTEL GMBH & CO. KG, D-65479 Raunheim (DE)
(72) Erfinder: Nittel, Cornelius, 65193 Wiesbaden (DE)
(74) Vertreter: Schaefer, Gerhard, Dr.

(57) **Zusammenfassung**

Bei einem Verfahren zur Herstellung von flexiblen Kunststoffbehältern aus zwei Formhälften, in deren Verbindungsnaht mindestens ein Einlegeteil (3) zur Befüllung und/oder Entleerung des Behälters eingefügt wird, das senkrecht zur Behälterwand verlaufende Preßflächen aufweist, ist der Winkel der Preßflächen an jeder Verbindungsstelle mit den Formhälften größer als 90°, vorzugsweise nahezu 180°. in bezug auf die Verbindungsnaht der beiden Formhälften.

## Beschreibung

Die Erfindung betrifft ein Verfahren zur Herstellung eines flexiblen Kunststoffbehälters aus zwei Formhälften, in deren Verbindungsnaht mindestens ein Einlegeteil zur Befüllung und/oder Entleerung des Behälters eingefügt wird, das senkrecht zur Behälterwand verlaufende Preßflächen aufweist.

Für die Herstellung von Behältern aus geteilten Formen sind verschiedene Verfahren bekannt. Beispielsweise dienen hierfür Spritzguß-, Blasform- oder Tiefziehverfahren. In vielen Fällen dient die geteilte Form der besseren Entfernung oder Entnahme der geformten Gegenstände, so daß einstückige Behälter entstehen. Beim Tiefziehen von Folien mittels Druckdifferenz sind geteilte Formen vor allem im sogenannten Twinsheet-Verfahren bekannt, wie sie beispielsweise in der EP-A1 0 579 937 beschrieben sind. Eine andere Art der Formgebung aus zwei Formhälften wird in der DE-C2 35 13 388 beschrieben. Der so geformte Gegenstand wird während des Formgebungsverfahrens entlang einer Paßfläche der Formhälften zusammengepreßt und umlaufend verschweißt. Öffnungen im ausgeformten Gegenstand müssen in der Wandung nach dem Entformen eingebracht werden, insbesondere bei Behälterformen zum Befüllen und Entleeren. Ein entsprechendes Verfahren ist unter anderem aus der DE-A1 40 23 274 bekannt.

Um diesen zusätzlichen Arbeitsgang zu vermeiden, ist bereits versucht worden, das Anschlußelement zwischen den Flachfolienbändern umfangsseitig zu verschweißen, indem die thermoplastifizierten Folien das nach außen abstehende Teil des Anschlußelements umschließen und darauf formstabil abkühlen (DE-A1 39 29 665 und 29 29 665). Alternativ ist auch bekannt, die flanschartige Erweiterung eines nach außen abstehenden Rohransatzes zu hinterschneiden. In diesen Fällen wird unterstellt, daß das Formgebungsmaterial in fließfähigem Zustand ein Anschlußelement so ummantelt, daß eine Verschweißung erfolgt, weil das Folienmaterial in der Umgebung des Anschlußelements formstabil abkühlen kann. Die Praxis hat jedoch gezeigt, daß nicht fließfähig erhitzte Flächen von Verbindungsteilen mit dem fließfähig erhitzten Folienmaterial allein durch Umschließung keine innige, dichtende Schweißverbindung eingehen.

Bei kleineren Behältnissen, deren Inhalt maximal 20 l beträgt, von denen in den vorgenannten Druckschriften ausgegangen wird, mag in vielen Fällen das angegebene Verfahren zur Verbindung des Behälters mit den Anschlußteilen ausreichen. Sofern jedoch Dichtverbindungen von ausgeformten Folien mit Verschlußteilen gefordert werden, die hohen Prüfvorschriften nach Transportsicherheit standhalten müssen, sind die bekannten Verfahren bei Behältern von 30 bis 1000 l Inhalt und mehr nicht gewährleistet. Auch das aus der DE-A1 39 40 497 bekannte Verfahren reicht nicht aus, weil dort davon ausgegangen wird, daß fließfähiges Material in eine Einschnürung fließt, wenn das Anschlußelement mit seiner Stirnseite angepreßt wird. Diese außenflächige Verbindung umschließt einen wie immer gearteten Flanschteil nicht ausreichend dichtend. Es wird besonders darauf verwiesen, daß eine Umschließung von Rohrstutzen im Übergangsbereich von Rohrmantel-Außenfläche zur weiterlaufenden Naht im Behälterrand eine leicht offene Lippe bildet. Dies geschieht deshalb, weil die Druckverhältnisse zur geschlossenen Nahtbildung nicht ausreichen, die letzte Phase eines fast senkrecht laufenden Halbkreises zu erfassen.

Der Erfindung liegt die Aufgabe zugrunde, den Nahtübergangsbereich so zu gestalten, daß eine zuverlässige Verbindung zwischen dem Einlegeteil und dem Behälter gewährleistet ist.

Diese Aufgabe wird dadurch gelöst, daß die Preßflächen des Einlegeteils an jeder Verbindungsstelle mit den Formhälften einen Winkel > 90° in bezug auf die Verbindungsnaht der beiden Formhälften aufweist. Ganz besonders vorteilhaft ist es, wenn dieser Winkel nahezu 180° beträgt. Das Einlegeteil, für das auch die Bezeichnung Flanschteil verwendet werden kann und das der Befüllung und/oder Entleerung des Behälters dienen kann, ist im wesentlichen so aufgebaut, daß auf einem ebenen, innen offenen Basisteil mit senkrecht verlaufenden äußeren Preßflächen sich ein vorzugsweise zylindrischer Stutzen befindet. Der Stutzen ist üblicherweise einstückig mit dem Basisteil und vorzugsweise mit einem Außengewinde zum Aufschrauben eines Deckels oder einer Zuführungs- oder Abführungsleitung versehen.

Das Basisteil des Einlegeteils kann gemäß einer vorteilhaften Ausbildung der Erfindung Preßflächen aufweisen, die im Querschnitt quadratisch, rechteckig oder sechseckig ausgebildet sind, wobei zwei einander gegenüberliegende Kanten in Richtung der Verbindungsnaht verlaufen. Besonders vorteilhaft ist es. wenn das Einlegeteil zwei im Grundriß gekrümmt verlaufende Preßflächen aufweist, die an zwei gegenüberliegenden Enden einen spitzen Winkel bilden. Die Preßflächen können besonders einfacherweise eben ausgebildet sein. Sie können auch parallel zur Verbindungsnaht verlaufende Ausnehmungen aufweisen. Auch sind regelmäßig über die Preßfläche verteilte Ausnehmungen und/oder Erhebungen möglich. Auch können die Preßflächen mit einer Rasterung versehen sein. Die Höhe der Preßflächen richtet sich nach der Behältergröße. Sie kann im Bereich von 20 mm und mehr liegen. Die Preßflächen werden vorteilhafterweise von der Folie der Behälterhälften vollständig abgedeckt.

Das erfindungsgemäße Verfahren eignet sich insbesondere zur Herstellung von flexiblen Kunststoffbehältern, die in falt- oder klappbaren Palettencontainern eingestellt werden und flüssige Produkte lagern oder transportieren, mit Inhalten größer als 50 l, vorzugsweise größer als 100 l.

Weitere Einzelheiten und Vorteile der Erfindung können den in der Zeichnung dargestellten Ausführungsbeispielen entnommen werden. Es zeigen:
- Fig. 1: eine Seitenansicht eines Behälters mit erfindungsgemäß eingesetzten Einlegeteilen:
- Fig. 2: eine Draufsicht auf den Behälter nach Fig. 1;
- Fig. 3: eine Seitenansicht eines Einlegeteils mit Gewindeansatz;
- Fig. 4: eine Draufsicht auf das in Fig. 3 dargestellte Einlegeteil;
- Fig. 5: einen schematischen Schnitt durch eine Vorrichtung zur Herstellung der Behälterhälften;
- Fig. 6A-6F: verschiedene Querschnitte des Einlegeteils in perspektivischer Ansicht.

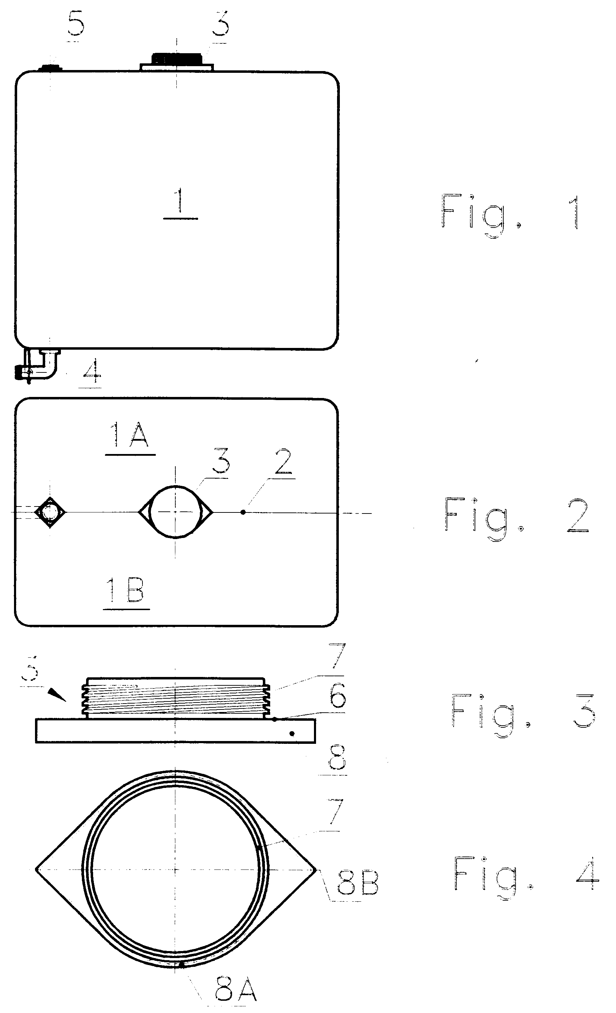

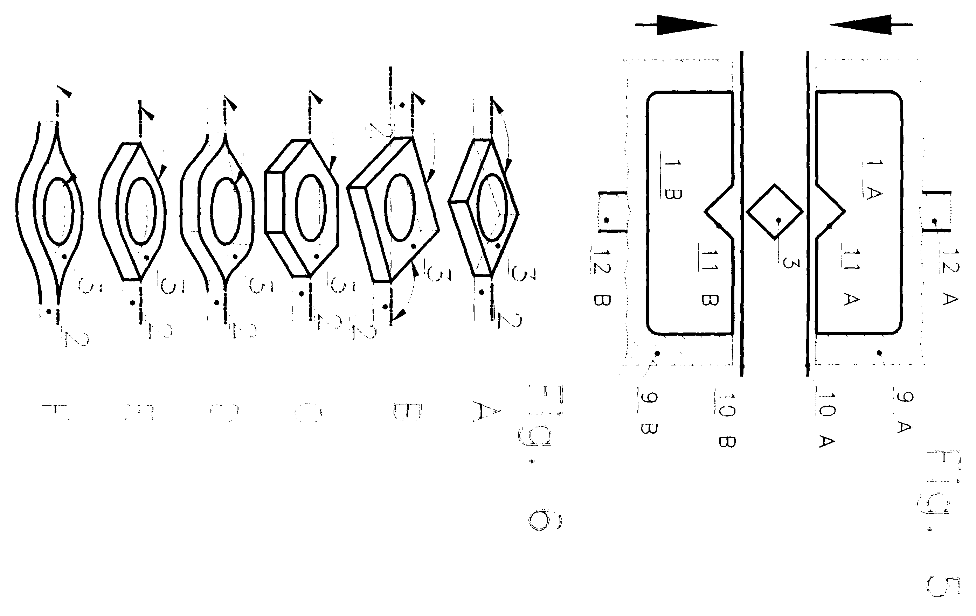

Der in den Fig. 1 und 2 dargestellte Behälter 1 ist nach dem sogenannten Twinsheet-Verfahren durch Tiefziehen zweier thermoplastischer Folien mittels Druckdifferenz in bekannter Weise hergestellt. Auf dieses Verfahren wird an späterer Stelle in Zusammenhang mit Fig. 5 noch näher eingegangen. Bei diesem Verfahren wird die Nahtstelle 2 der beiden Hälften 1A und 1B des Behälters 1 während des Tiefziehvorgangs thermoplastisch verschweißt. In die obere Fläche des Behälters 1 ist ein Einlegeteil 3 eingesetzt, durch das die Befüllung des Behälters 1 vorgenommen werden kann. Dieses Einlegeteil 3 kann, wie vor allem in Zusammenhang mit den Fig. 6A bis 6F beschrieben, verschiedene Formen aufweisen. Es wird erfindungsgemäß in die Naht 2 eingeschweißt. Das Einlegeteil 3 kann als Einfüllstutzen mit Gewinde ausgebildet sein, wie dies in den Fig. 3 und 4 im einzelnen dargestellt ist. In den unteren Teil des Behälters 1 kann zusätzlich ein als Auslaufstutzen ausgebildetes Einlegeteil 4 eingesetzt werden, das beispielsweise gekrümmt und mit einem Absperrventil versehen sein kann. Auch dieses Einlegeteil 4 wird in erfindungsgemäßer Weise in die Verbindungsnaht 2 eingesetzt und mit den beiden Behälterhälften 1A und 1B dicht verbunden. Zusätzlich kann in die obere Behälterfläche noch ein Einlegeteil 5 eingesetzt werden, das eine Be- oder Entlüftungsöffnung aufweist und mit einer Schraubkappe versehen sein kann. Der für Versuchszwecke verwendete Behälter hatte einen Inhalt von 750 l. Er hatte eine Länge von 1080 mm, eine Breite von 930 mm und eine Höhe von 765 mm. Das Gewicht des Behälters betrug 4,5 kg. Die minimale Wandstärke betrug 0,4 mm. Als Werkstoff wurde LDPE verwendet.

Das Einlegeteil 3, das in den Fig. 3 und 4 in vergrößertem Maßstab dargestellt ist, besteht aus einem Basisteil 6, dessen untere Fläche eben ausgebildet ist und an dessen oberer Fläche ein mit einem Außengewinde versehener Einfüllstutzen 7 angeformt ist, der mit einer Schraubkappe verschließbar ist. Das Basisteil 6 des Einlegeteils 3 weist senkrecht zur Bodenfläche verlaufende Preßflächen 8 auf, die bei der hier dargestellten Ausführungsform im mittleren Bereich 8A einen dem Einfüllstutzen 7 entsprechenden kreisabschnittförmigen Querschnitt aufweisen und die daran anschließend tangential geradlinig verlaufen und je eine Spitze 8B bilden. Die Verbindungslinie der beiden Spitzen 8B der Preßflächen 8 des Einlegeteils 3 liegen in der Linie der Verbindungsnaht 2 der beiden Behälterhälften 1A und 1B. Bei einem Ausführungsbeispiel eines Behälters mit den vorbeschriebenen Abmessungen und 750 l Inhalt betrug die Höhe der Preßflächen 20 mm und ihre Länge beiderseits des Einfüllstutzens je 240 mm.

Das Einsetzen des Einlegeteils 3 erfolgt in folgender Weise: Nach dem bekannten Twinsheet-Verfahren werden die beiden thermoplastischen Folien 10A und 10B nach ihrer Erhitzung mittels Unterdruck in die beiden Formhälften 9A und 9B gezogen. An der für die Aufnahme der Preßfläche 8 des Einlegeteils 3 des zu formenden Behälters vorgesehenen Stelle ist in jeder Formhälfte eine der Form des Einlegeteils 3 entsprechende Ausnehmung 11A bzw. 11B vorgesehen. Die beiden Behälterhälften werden in ihren Formteilen 9A und 9B mittels der Aufnehmer in Richtung der Pfeile zusammengeführt, und die Ausformung der Behälterhälften 1A und 1B wird vorgenommen, wobei das Einlegeteil 3 so gehaltert ist, daß seine Preßfläche 8 von den Rändern der beiden Behälterhälften 1A und 1B teilweise bedeckt und danach bei der thermischen Verbindung der Gesamtnaht 2 der beiden Behälterhälften 1A und 1B dicht mit diesen verbunden wird. Nach dem Auseinanderfahren der beiden Formhälften 9A und 9B sind also die beiden Behälterhälften dicht miteinander und mit dem Einlegeteil 3 verbunden.

Weitere Ausführungsformen der Basisteile der für das erfindungsgemäße Verfahren in vorteilhafter Weise einsetzbaren Einlegeteile 3 sind in den Fig. 6A bis 6F perspektivisch dargestellt. Diese Basisteile können mit Befüll-, Entleerungs- oder Entlüftungseinrichtungen versehen sein, wie sie beispielsweise in den Fig. 1 und 3 dargestellt sind. Ganz wesentlich ist in jedem Fall, daß erfindungsgemäß die einander gegenüberliegenden Kanten der Preßflächen in einer Linie mit bzw. parallel zu der Verbindungsnaht 2 der beiden Behälterhälften 1A und 1B liegen. Die mit zwei Pfeilspitzen versehenen Bogen zeigen jeweils den Winkel zwischen der Verbindungsnaht 2 und der Preßfläche 8.

In der in Fig. 6A dargestellten Ausführungsform ist das Basisteil des Einlegeteils 3 im Querschnitt quadratisch ausgebildet. Zwei einander gegenüberliegende Kanten liegen in Richtung der Verbindungsnaht 2 der Behälterhälften 1A und 1B. Bei der Ausführungsform 6B ist das Basisteil im Querschnitt rechteckig ausgebildet. Die Naht 2 endet dabei von beiden Seiten her parallel an den einander gegenüberliegenden Kanten des Basisteils, jedoch nicht in einer Verbindungslinie. Bei der Ausführungsform nach Fig. 6C hat das Basisteil die Querschnittsform eines regelmäßigen Sechsecks. Eine davon abgewandelte Ausführungsform zeigt Fig. 6D, bei der die Preßflächen nahe den in Richtung der Verbindungsnaht liegenden Kanten gekrümmt sind. Fig. 6E zeigt ein Basisteil, bei dem die Preßflächen insgesamt gekrümmt sind und entsprechend dem in Fig. 4 dargestellten Ausführungsbeispiel zwei Kanten aufweisen, an denen die gekrümmten Preßflächen zusammentreffen. Fig. 6F zeigt eine der Fig. 6E ähnliche Ausführungsform, bei der das Basisteil im Bereich der Kanten gestreckt ist.

## Patentansprüche

1. Verfahren zur Herstellung von flexiblen Kunststoffbehältern aus zwei Formhälften, in deren Verbindungsnaht mindestens ein Einlegeteil zur Befüllung und/oder Entleerung des Behälters eingefügt wird, das senkrecht zur Behälterwand verlaufende Preßflächen aufweist, **dadurch gekennzeichnet, daß** die Preßflächen an jeder Verbindungsstelle mit den Formhälften einen Winkel größer als 90° in bezug auf die Verbindungsnaht der beiden Formhälften aufweisen.

2. Verfahren nach Anspruch 1, dadurch gekennzeichnet, daß der Winkel nahezu 180° beträgt.

3. Verfahren nach Anspruch 1 oder 2, dadurch gekennzeichnet, daß der Querschnitt des Einlegeteils quadratisch, rechteckig oder sechseckig ausgebildet ist und zwei einander gegenüberliegende Kanten in Richtung der Behälternaht verlaufen.

4. Verfahren nach Anspruch 1 oder 2, dadurch gekennzeichnet, daß das Einlegeteil zwei im Grundriß gekrümmt verlaufende Seitenflächen aufweist, die an zwei gegenüberliegenden Enden einen spitzen Winkel bilden.

5. Verfahren nach einem der vorhergehenden Ansprüche. dadurch gekennzeichnet, daß die Preßflächen des Einlegeteils eben ausgebildet sind.

6. Verfahren nach einem der Ansprüche 1 bis 4, dadurch gekennzeichnet, daß die Preßflächen parallel zur Verbindungsnaht mit den Behälterteilen verlaufende Ausnehmungen aufweist.

7. Verfahren nach einem der Ansprüche 1 bis 4, dadurch gekennzeichnet, daß die Preßfläche regelmäßig verteilte Ausnehmungen und/oder Erhebungen aufweist.

8. Flexibler Kunststoffbehältern, hergestellt aus zwei Formhälften, in deren Verbindungsnaht mindestens ein Einlegeteil zur Befüllung und/oder Entleerung des Behälters eingefügt ist, das senkrecht zur Behälterwand verlaufende Preßflächen aufweist, dadurch gekennzeichnet, daß die Preßflächen an jeder Verbindungsstelle mit den Formhälften einen Winkel größer als 90° in bezug auf die Verbindungsnaht der beiden Formhälften aufweisen.

9. Behälter nach Anspruch 8, dadurch gekennzeichnet, daß der Winkel nahezu 180° beträgt.

10. Behälter nach Anspruch 8 oder 9, dadurch gekennzeichnet, daß der Querschnitt des Einlegeteils quadratisch, rechteckig oder sechseckig ausgebildet ist und zwei einander gegenüberliegende Kanten in Richtung der Behälternaht verlaufen.

11. Behälter nach Anspruch 8 oder 9, dadurch gekennzeichnet, daß das Einlegeteil zwei im Grundriß gekrümmt verlaufende Seitenflächen aufweist, die an zwei gegenüberliegenden Enden einen spitzen Winkel bilden.

12. Behälter nach einem der Ansprüche 8 bis 11, dadurch gekennzeichnet, daß die Preßflächen des Einlegeteils eben ausgebildet sind.

13. Behälter nach einem der Ansprüche 8 bis 11, dadurch gekennzeichnet, daß die Preßflächen parallel zur Verbindungsnaht mit den Behälterteilen verlaufende Ausnehmungen aufweist.

14. Behälter nach einem der Ansprüche 8 bis 11, dadurch gekennzeichnet, daß die Preßfläche regelmäßig verteilte Ausnehmungen und/oder Erhebungen aufweist.
